# FASCICULE DE BREVET EUROPEEN

(11) **EP 2 119 388 B1**
(45) Date de publication et mention de la délivrance du brevet: **25.01.2017**
(21) Numéro de dépôt: 09290355.8
(22) Date de dépôt: 13.05.2009
(51) Int. Cl.: A47L 9/20, A47L 9/12

(54) **Dispositif de nettoyage par vibration du filtre d'un système d'aspiration**
Filterreinigungsvorrichtung eines Saugsystems durch Vibration
Device for cleaning the filter of a suction system by vibration

(30) Priorité: 16.05.2008 FR 0802640
(43) Date de publication de la demande: 18.11.2009
(73) Titulaire: AMPHORA S.A.S., 51100 Reims (FR)
(72) Inventeur: Orban, Pierre, 51100 Reims (FR)
(74) Mandataire: Debay, Yves

(56) Documents cités:
- DE-U1- 29 505 149
- FR-A- 1 163 298
- US-A- 489 776
- US-A- 2 488 300

## Description

La présente invention se rapporte au domaine des dispositifs autonettoyants de filtres et plus particulièrement au domaine des dispositifs autonettoyants de filtres de système d'aspiration.

Il est courant d'utiliser un aspirateur pour nettoyer les poussières présentes sur une surface. Les poussières sont aspirées par un flux d'air qui traverse un filtre positionné sur la ligne de flux et arrangé pour retenir les poussières, les stocker et éventuellement permettre leur élimination.

Une fois aspirées, les poussières sont retenues dans l'appareil au niveau d'un filtre. Après des utilisations prolongées ou répétées, les poussières qui sont retenues obstruent le filtre et diminuent alors la qualité de l'aspiration qui le traverse. Selon le modèle d'aspirateur utilisé, il est alors nécessaire de retirer le filtre pour le remplacer ou pour le nettoyer et en retirer les poussières qui s'y sont agglomérées. Toutefois, ces dispositifs ne permettent pas de maintenir une qualité optimale et permanente de l'aspiration qui traverse le filtre. En effet, les dispositifs de filtration utilisés actuellement présentent une diminution du flux d'aspiration qui se réalise concomitamment avec l'augmentation des poussières retenues par le filtre.

Pour s'affranchir de ce problème, une solution proposée par le document JP2005279505 présente un aspirateur muni d'un filtre recouvert de PTFE (Poly-tétra-fluoro-éthylène) qui retient les poussières aspirées. Les poussières retenues à la surface du filtre peuvent alors être facilement retirées en générant une oscillation du filtre pour maintenir une aspiration optimale de l'appareil. De façon similaire, le document DE10313402 propose un filtre à air qui récupère la poussière au niveau d'un filtre tout en permettant une élimination de la poussière piégée réalisée de façon continue grâce à dispositif intégrant un balourd et associé à un moteur électrique qui exerce une vibration du filtre. Toutefois, il convient de remarquer que ces différents dispositifs nécessitent plusieurs moteurs pour permettre l'oscillation ou la vibration du filtre. Ces moteurs additionnels ont comme inconvénient d'alourdir le poids de l'appareil, d'augmenter le nombre de pièces à monter sur l'appareil et donc d'accroitre la durée du temps de montage de l'appareil. De plus, la multiplication du nombre de moteurs dans ces appareils augmente également le risque de casse.

La présente invention a pour objectif de surmonter au moins un inconvénient de l'art antérieur et notamment de fournir une solution pour maintenir une aspiration optimale et constante lors du fonctionnement de l'appareil d'aspiration et du filtrage des poussières, mais également pour diminuer le nombre de moteurs dans un appareil d'aspiration et ainsi permettre de réduire le temps de montage et le risque de casse de l'appareil.

Cet objectif est atteint grâce à un dispositif de nettoyage par vibration d'au moins un filtre monté sur la ligne du flux d'air d'un moteur d'aspiration, caractérisé en ce que le dispositif de nettoyage comprend au moins, en aval du filtre par rapport au sens du flux d'air déplacé par le moteur, une hélice munie d'au moins une ailette montée sur au moins une ligne du flux d'air d'aspiration de poussières par le moteur de façon à être mise en rotation par le flux d'air qui la traverse, l'hélice étant montée solidaire en rotation avec un balourd de sorte que la rotation de l'hélice entraîne la rotation du balourd qui génère une oscillation et/ou une vibration transmise à au moins un filtre du dispositif pour permettre le détachement des poussières agrégées sur le filtre.

Selon une variante de réalisation de l'invention, le dispositif de nettoyage par vibration d'au moins un filtre monté sur la ligne du flux d'air d'un moteur d'aspiration est caractérisé en ce que le balourd est monté solidaire en rotation avec l'hélice et est positionné de façon désaxée par rapport à l'axe de pivotement de l'hélice de sorte que la rotation de l'hélice et du balourd génère un mouvement d'oscillation.

Selon une autre variante de réalisation de l'invention, le dispositif de nettoyage par vibration d'au moins un filtre monté sur la ligne du flux d'air d'un moteur d'aspiration est caractérisé en ce que l'hélice est montée d'une pièce qui comprend au moins deux branches réalisant un angle entre elles de façon à obtenir une forme en « L », une des branches étant montée sur l'axe de pivotement de l'hélice, solidaire en rotation avec l'hélice et l'autre branche formant le balourd en mouvement.

Selon une autre variante de réalisation de l'invention, le dispositif de nettoyage par vibration d'au moins un filtre monté sur la ligne du flux d'air d'un moteur d'aspiration est caractérisé en ce que le balourd est formé par un poids monté solidaire sur une des ailettes de l'hélice de façon que la rotation de l'hélice fasse pivoter le balourd et génère un mouvement d'oscillation.

Selon une autre variante de réalisation de l'invention, le dispositif de nettoyage par vibration d'au moins un filtre monté sur la ligne du flux d'air d'un moteur d'aspiration est caractérisé en ce que le déplacement du balourd se réalise dans un plan perpendiculaire à au moins un filtre à nettoyer et/ou à au moins un plan tangent du filtre à nettoyer, de sorte que l'oscillation et/ou la vibration générée par le balourd est réalisée selon un axe perpendiculaire au plan d'au moins un filtre à nettoyer.

Selon une autre variante de réalisation de l'invention, le dispositif de nettoyage par vibration d'au moins un filtre monté sur la ligne du flux d'air d'un moteur d'aspiration est caractérisé en ce que le filtre comprend une matière à faible adhérence qui recouvre au moins la face contre laquelle se dépose la poussière aspirée et filtrée pour permettre une réduction du colmatage de la poussière et un détachement facilité de la poussière lorsque le filtre oscille et/ou vibre.

Selon une autre variante de réalisation de l'invention, le dispositif de nettoyage par vibration d'au moins un filtre monté sur la ligne du flux d'air d'un moteur d'aspiration est caractérisé en ce que le filtre comprend au moins une première couche en papier plissé positionnée en aval et une seconde couche réalisée à partir d'une matière à faible adhérence positionnée en amont par rapport au flux d'air en mouvement.

Selon une autre variante de réalisation de l'invention, le dispositif de nettoyage par vibration d'au moins un filtre monté sur la ligne du flux d'air d'un moteur d'aspiration est caractérisé en ce que le dispositif comprend un conteneur de récupération des poussières détachées et/ou retirée du filtre.

Selon une autre variante de réalisation de l'invention, le dispositif de nettoyage par vibration d'au moins un filtre monté sur la ligne du flux d'air d'un moteur d'aspiration est caractérisé en ce que l'hélice est positionnée en aval du filtre mis en vibration par rapport au sens du flux d'air dans le moteur d'aspiration.

Un autre objectif de l'invention est de proposer un système de filtration d'un flux d'air mettant en jeu le dispositif de l'invention.

Cet objectif est atteint grâce à un système comprenant un moteur d'aspiration et mettant en oeuvre un dispositif de nettoyage par vibration d'au moins un filtre selon l'invention, caractérisé en ce que, le système comprenant un orifice d'entrée du flux d'air aspiré et un orifice de sortie du flux d'air aspiré disposés respectivement en amont et en aval d'un moteur d'aspiration, l'hélice, montée du balourd, est positionnée au niveau de l'entrée de l'aspiration dans le moteur d'aspiration et le filtre réalise une poche qui enveloppe au moins l'orifice de sortie du flux d'air aspiré du système et/ou le moteur d'aspiration en positionnant au moins une partie du filtre dans un plan perpendiculaire au plan d'oscillation du balourd.

Selon une variante de réalisation de l'invention, le système comprenant un appareil d'aspiration et mettant en oeuvre un dispositif de nettoyage d'au moins un filtre est caractérisé en ce que le système comprend un conteneur de récupération des poussières aspirées et filtrées dans lequel débouche l'orifice d'entrée du flux d'air aspirée, le moteur d'aspiration étant positionné contre l'orifice de sortie du flux d'air du système, le filtre enveloppant l'hélice et le moteur d'aspiration étant alors positionnés dans une partie supérieure du conteneur de sorte que les poussières aspirées, filtrées et détachées du filtre tombent dans le conteneur de récupération.

Selon une autre variante de réalisation de l'invention, le système comprenant un appareil d'aspiration et mettant en oeuvre un dispositif de nettoyage d'au moins un filtre est caractérisé en ce que l'ensemble formé par le filtre, le moteur d'aspiration, l'hélice et le balourd oscillant, est monté contre la sortie du flux d'air du système par l'intermédiaire de moyens amortisseur pour limiter la transmission de vibrations à l'ensemble du système.

Selon une autre variante de réalisation de l'invention, le système comprenant un appareil d'aspiration et mettant en oeuvre un dispositif de nettoyage d'au moins un filtre est caractérisé en ce que le filtre comprend au moins une partie hermétique au passage du flux d'air pour imposer le passage du flux d'air au niveau d'au moins une partie du filtre positionnée dans un plan perpendiculaire au plan d'oscillation du balourd et arrangée pour que le nettoyage des poussières par vibration soit optimal.

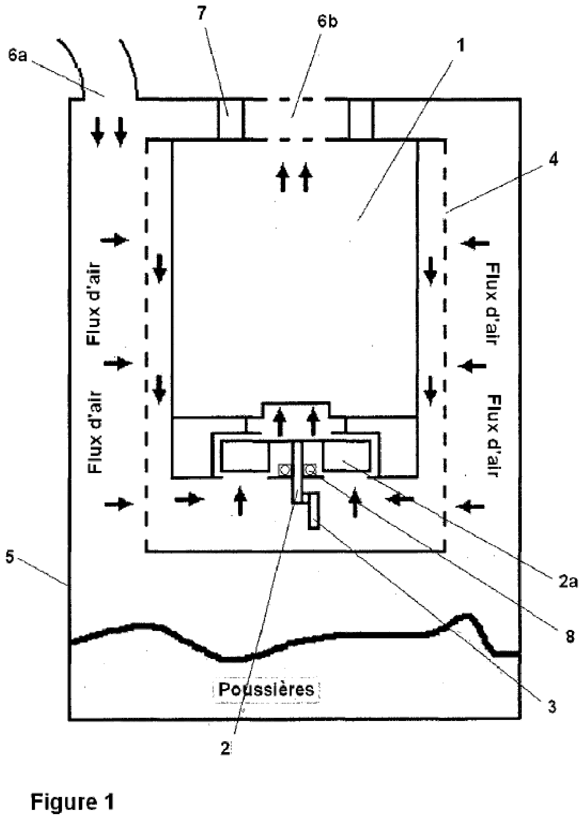

L'invention, avec ses caractéristiques et avantages, ressortira plus clairement à la lecture de la description faite en référence au dessin annexé dans lequel la figure 1 représente schématiquement une vue d'un exemple de réalisation d'un système intégrant le dispositif de nettoyage de filtre de l'invention.

Dans le présent document, il convient de comprendre le terme « poussières » dans un sens large en incluant les références aux cendres, résidus, particules, etc.

Le dispositif de l'invention est adaptable à tout appareil ou système mettant en jeu un filtre à air sur la ligne d'un flux d'air en déplacement. Ces appareils ou systèmes peuvent être, par exemple, des aspirateurs ou des filtres à air.

Figure 1 : Le dispositif de l'invention est destiné à être monté dans un appareil comprenant un moteur d'aspiration (1). Le dispositif comprend au moins une hélice (2), munie d'une ou de plusieurs pales ou ailettes (2a), positionnée sur la ligne de flux d'air déplacé par le moteur d'aspiration (1) de sorte que le flux d'air entraine la rotation de l'hélice (2). Sur l'hélice se trouve monté fixé un balourd (3) solidaire en rotation avec l'hélice (2) de sorte que la rotation du balourd (3) génère une vibration et/ou une oscillation destinée à être transmise à l'ensemble du dispositif et notamment à un filtre (4) dont on souhaite assurer le décolmatage des poussières retenues.

Selon un mode de réalisation particulier, le dispositif oscillant de l'invention est positionnée directement au niveau de l'arrivée d'air dans le moteur d'aspiration (1). La vibration et/ou l'oscillation destinée à être transmise au filtre (4) à nettoyer est donc directement générée par le flux d'air d'aspiration sans l'intervention d'un moteur additionnel.

Selon un mode de réalisation particulier de l'invention, le balourd (3) est formé par une pièce qui comprend au moins deux branches dont les axes réalisent entre eux un angle non nul. Les deux branches de la pièce présente alors sensiblement une forme de « L » lorsque les branches sont positionnées selon un angle droit. Une première des branches de la pièce est alors montée sur l'hélice (2) de sorte que son axe soit aligné avec l'axe de pivotement de l'hélice (2), la rotation de l'hélice entrainant le pivotement de la pièce autour de l'axe de la première branche. Le pivotement de la pièce entraine la rotation de la seconde branche qui forme ou supporte le balourd (3) et qui, avec la force centrifuge, génère un mouvement d'oscillation et de vibration du dispositif autour de l'axe de rotation de l'hélice (2). Cette force centrifuge, et donc ce mouvement d'oscillation, peut être amplifié en lestant le poids de la seconde branche de la pièce.

Selon un mode de réalisation préféré, le balourd est intégré dans une des ailettes (2a) de l'hélice (2). Le pivotement de l'hélice (2) entraine alors la rotation du balourd qui génère une oscillation et une vibration du dispositif. Une amplification de cette vibration peut avoir lieu grâce à un lestage de la masse du balourd en rotation autour de l'hélice du dispositif. Ce mode de réalisation présente l'avantage de réduire la durée de montage du dispositif en diminuant le nombre de pièces à fixer dans le dispositif.

Dans un mode de réalisation particulier, l'hélice (2) présente un axe de pivotement au niveau duquel elle est montée sur le bâti du dispositif par l'intermédiaire d'un roulement (8). L'axe de pivotement de l'hélice (2) se prolonge pour donner la première des branches de la pièce qui forme le balourd (3).

Dans un souci d'efficacité, le dispositif de décolmatage de l'invention est arrangé de sorte que les vibrations et/ou oscillations générées soient réalisées dans un plan perpendiculaire à au moins une tangente d'une partie du filtre. Un tel arrangement permet de faire en sorte que les vibrations transmises détachent les poussières disposées, fixées ou colmatées sur le filtre (4) et qui y forment une croûte.

Selon un mode de réalisation particulier, l'aspiration de l'air par le moteur (1) permet de faire tourner l'hélice (2) avec une vitesse de rotation pouvant atteindre les 4500 tours/minute. Avec une telle vitesse, la rotation du balourd (3) génère une vibration qui, transmise sur le filtre (4), restreint le colmatage des poussières sur le filtre (4).

Pour améliorer le nettoyage du filtre (4), le filtre utilisé peut présenter au moins sur sa face qui retient les poussières, c'est-à-dire la face positionnée en amont du filtre (4) par rapport au flux d'air déplacé, un revêtement dans une matière à faible adhérence, par exemple du nylon ou du PTFE (Poly-tétra-fluoro-éthylène). Selon un mode de réalisation particulier, le filtre (4) est formé par deux couches, une première couche en amont formée par une poche en textile tissé avec une matière à faible adhérence et une seconde couche en aval formée de papier plissé.

L'intégration du dispositif de nettoyage de filtre de l'invention dans un système de filtration d'air aspiré se réalise préférentiellement en positionnant le dispositif générateur de vibration avec le moteur (1) d'aspiration en aval du filtre (4) par rapport au flux d'air en déplacement. En positionnant le dispositif vibrant et le moteur (1) de cette façon, l'encrassage par les poussières est évité.

Selon un mode de réalisation préféré, le système intégrant le dispositif comprend un conteneur (5) de récupération des poussières filtrées. Ce conteneur (5) peut être recouvert d'un couvercle pour permettre d'en vider les poussières récupérées. Le conteneur (5) forme un volume dans la partie supérieure duquel se trouve disposé le moteur d'aspiration (1), le dispositif oscillant de l'invention et le filtre (4) destiné à être nettoyé sous l'action du dispositif oscillant. Les poussières décollées du filtre (4) chutent alors dans la partie inférieure du conteneur (5) de récupération. Le flux d'air aspiré traverse le conteneur (5) depuis un orifice d'entrée (6a) vers un orifice de sortie (6b), ces deux orifices (6a, 6b) étant réalisés dans la paroi du conteneur (5) et/ou de son couvercle. Le moteur d'aspiration (1) qui génère le déplacement de l'air dans le système est monté avec le dispositif oscillant de l'invention sur la paroi du conteneur (5) au niveau de l'orifice de sortie (6b).

Dans le système, le filtre (4) forme une poche filtrante qui enveloppe l'ensemble formé par le moteur d'aspiration (1) et le dispositif oscillant de l'invention. En enveloppant cet ensemble, le filtre (4) forme un volume qui présente une surface de filtration supérieure à la surface de l'orifice d'entrée de l'air aspiré dans le moteur d'aspiration (1). Le volume du filtre (4) présente alors préférentiellement une forme sensiblement cylindrique ou allongée qui comprend au moins deux faces dont les plans ou les tangentes à leur plan sont parallèles entre eux.

Pour optimiser le décollement des poussières de la surface du filtre, les faces du filtre (4) sont alors préférentiellement positionnées dans des plans perpendiculaires au plan de déplacement du balourd (3) en mouvement. Pour ce faire, un mode de réalisation particulier consiste à avoir un moteur d'aspiration (1) de forme sensiblement allongée dont une première extrémité est accolée à l'orifice de sortie (6b) de l'air du conteneur (5) et la seconde extrémité est montée du dispositif oscillant de l'invention dont l'axe de rotation de l'hélice (2) est aligné sur l'axe du moteur. En ayant une forme allongée qui enveloppe l'ensemble formé par le moteur (1) et le dispositif d'oscillation, le filtre (4) positionne plusieurs de ses faces en regard des faces latérales du moteur (1). Les faces latérales du filtre (4) se trouvent alors disposées perpendiculairement au plan d'oscillation du balourd (3).

Selon une particularité de réalisation, la partie de l'enveloppe filtrante (4) située en regard de l'orifice d'entrée de l'air aspiré dans le moteur d'aspiration (1) et disposée de façon sensiblement parallèle au plan d'oscillation du balourd (3) du dispositif oscillant de l'invention, est hermétique au passage de l'air aspiré pour imposer au flux d'air un passage au niveau des parois du filtre (4) qui sont perpendiculaires au plan d'oscillation du balourd (3). Un tel arrangement permet de n'obtenir un dépôt de poussières qu'au niveau des faces du filtre (4) dont le nettoyage sera assuré grâce au dispositif oscillant de l'invention.

Pour éviter que l'ensemble du système intégrant le dispositif d'oscillation de l'invention ne vibre, l'ensemble formé par le filtre (4), le moteur d'aspiration (1) et le dispositif d'oscillation est monté sur la paroi du conteneur (5) par l'intermédiaire de moyens de fixation (*silentblock*) (7) en matériau souple qui permet d'absorber les vibrations générées par le balourd (3). Ces moyens (7) amortisseurs et/ou élastiques peuvent être réalisés en caoutchouc ou en toute matière plastique adaptée.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Dispositif de nettoyage par vibration d'au moins un filtre (4) monté sur la ligne du flux d'air d'un moteur d'aspiration (1), **caractérisé en ce que** le dispositif de nettoyage comprend au moins, en aval du filtre (4) par rapport au sens du flux d'air déplacé par le moteur, une hélice (2) munie d'au moins une ailette (2a) montée sur au moins la ligne du flux d'air d'aspiration de poussières du moteur de façon à être mise en rotation par le flux d'air qui la traverse, l'hélice (2) étant montée solidaire en rotation avec un balourd (3) de sorte que la rotation de l'hélice (2) entraine la rotation du balourd (3) qui génère une oscillation et/ou une vibration transmise à au moins le filtre (4) du dispositif pour permettre le détachement des poussières agrégées sur le filtre (4).

2. Dispositif de nettoyage selon la revendication 1, **caractérisé en ce que** ledit balourd (3) est positionné de façon désaxée par rapport à l'axe de pivotement de l'hélice (2) de sorte que la rotation de l'hélice (2) et du balourd (3) génère un mouvement d'oscillation.

3. Dispositif de nettoyage selon la revendication 2, **caractérisé en ce que** l'hélice (2) est montée d'une pièce qui comprend au moins deux branches réalisant un angle entre elles de façon à obtenir une forme en « L », une des branches étant montée sur l'axe de pivotement de l'hélice (2), solidaire en rotation avec l'hélice (2), et l'autre branche formant le balourd (3) en mouvement.

4. Dispositif de nettoyage selon la revendication 1, **caractérisé en ce que** le balourd (3) est formé par un poids monté solidaire sur une des ailettes (2a) de l'hélice (2) de façon que la rotation de l'hélice (2) fasse pivoter le balourd (3) et génère un mouvement d'oscillation.

5. Dispositif de nettoyage selon une des revendications précédentes, **caractérisé en ce que** le déplacement du balourd (3) se réalise dans un plan perpendiculaire à au moins un filtre (4) à nettoyer et/ou à au moins un plan tangent du filtre (4) à nettoyer, de sorte que l'oscillation et/ou la vibration générée par le balourd (3) est réalisée selon un axe perpendiculaire au plan du filtre à nettoyer.

6. Dispositif de nettoyage selon une des revendications précédentes, **caractérisé en ce que** le filtre (4) comprend une matière à faible adhérence qui recouvre au moins la face contre laquelle se dépose la poussière aspirée et filtrée pour permettre une réduction du colmatage de la poussière et un détachement facilité de la poussière lorsque le filtre (4) oscille et/ou vibre.

7. Dispositif de nettoyage selon la revendication 6, **caractérisé en ce que** le filtre (4) comprend au moins une première couche en papier plissé positionnée en aval et une seconde couche réalisée à partir d'une matière à faible adhérence positionnée en amont par rapport au flux d'air en mouvement.

8. Dispositif de nettoyage selon une des revendications précédentes, **caractérisé en ce que** le dispositif comprend un conteneur de récupération (5) des poussières détachées et/ou retirée du filtre (4).

9. Dispositif de nettoyage selon une des revendications précédentes, **caractérisé en ce que** l'hélice (2) est positionnée en aval du filtre (4) mis en vibration par rapport au sens du flux d'air dans le moteur d'aspiration (1).

10. Système comprenant le moteur d'aspiration (1) et mettant en oeuvre le dispositif de nettoyage selon un des revendications 1 à 9, **caractérisé en ce que**, le système comprenant un orifice d'entrée (6a) du flux d'air aspiré et un orifice de sortie (6b) du flux d'air aspiré disposés respectivement en amont et en aval du moteur d'aspiration (1), l'hélice (2), montée du balourd (3), est positionnée au niveau de l'entrée de l'aspiration dans le moteur d'aspiration (1) et le filtre (4) réalise une poche qui enveloppe au moins l'orifice de sortie (6b) du flux d'air aspiré du système et/ou le moteur d'aspiration (1) en positionnement au moins une partie du filtre (4) dans un plan perpendiculaire au plan d'oscillation du balourd (3).

11. Système selon la revendication 10, **caractérisé en ce que** le système comprend un conteneur de récupération (5) des poussières, selon la revendication 8, aspirées et filtrées dans lequel débouche l'orifice d'entrée du flux d'air aspirée (6a), le moteur d'aspiration (1) étant positionné contre l'orifice de sortie (6b) du flux d'air du système, le filtre (4) enveloppant l'hélice (2) et le moteur d'aspiration (1) étant alors positionnés dans une partie supérieure du conteneur (5) de sorte que les poussières aspirées, filtrées et détachées du filtre (4) tombent dans le conteneur de récupération.

12. Système selon la revendication 11, **caractérisé en ce que** l'ensemble formé par le filtre (4), le moteur d'aspiration (1), l'hélice (2) et le balourd (3) oscillant, est monté contre la sortie (6b) du flux d'air du système par l'intermédiaire de moyens amortisseur (7) pour limiter la transmission de vibrations à l'ensemble du système.

13. Système selon une des revendications 10 à 12, **caractérisé en ce que** le filtre (4) comprend au moins une partie hermétique au passage du flux d'air pour imposer le passage du flux d'air au niveau d'au moins une partie du filtre (4) positionnée dans un plan perpendiculaire au plan d'oscillation du balourd (3) et arrangée pour que le nettoyage des poussières par vibration soit optimal.

## Patentansprüche

1. Reinigungsvorrichtung zur Vibrationsreinigung wenigstens eines in einer Strömungslinie des Luftstroms eines Saugmotors (1) angeordneten Filters (4),
**dadurch gekennzeichnet, dass**
die Reinigungsvorrichtung bezüglich des von dem Motor bewegten Luftstroms stromabwärts des Filters (4) zumindest ein Flügelrad (2) umfasst mit zumindest einem in zumindest einer Strömungslinie des Luftstroms zum Staubansaugen des Motors derart angeordneten Flügel (2a), dass das Flügelrad (2) von dem ihn durchströmenden Luftstrom in Rotation versetzt wird, wobei das Flügelrad (2) zur gemeinsamen Rotation mit einer Unwuchtmasse (3) verbunden ist, sodass eine Rotation des Flügelrades (2) eine Rotation der Unwuchtmasse (3) nach sich zieht, wobei die Rotation der Unwuchtmasse (3) eine zumindest auf den Filter (4) der Vorrichtung übertragene Schwingung und/oder Vibration verursacht, um das Ablösen auf dem Filter (4) angesammelten Staubes zu ermöglichen.

2. Reinigungsvorrichtung nach Anspruch 1,
**dadurch gekennzeichnet, dass**
die vorgenannte Unwuchtmasse (3) versetzt zur Drehachse des Flügelrades (2) angeordnet ist, sodass eine Rotation des Flügelrades (2) und der Unwuchtmasse (3) eine Schwingungsbewegung verursacht.

3. Reinigungsvorrichtung nach Anspruch 2,
**dadurch gekennzeichnet, dass**
das Flügelrad (2) ein Teil aufweist, das wenigstens zwei Arme umfasst, zwischen denen ein Winkel liegt, um die Form eines "L" zu erhalten, wobei einer der Arme auf der Drehachse des Flügelrades (2) angeordnet ist und einer Rotation des Flügelrades (2) folgt, und der andere Arm in Bewegung die Unwuchtmasse (4) bildet.

4. Reinigungsvorrichtung nach Anspruch 1,
**dadurch gekennzeichnet, dass**
die Unwuchtmasse (3) von einem Gewicht gebildet wird, das an einem der Flügel (2a) des Flügelrades (2) befestigt ist, sodass die Rotation des Flügelrades (2) die Unwuchtmasse (3) dreht und eine Schwingungsbewegung verursacht.

5. Reinigungsvorrichtung nach einem der vorhergehenden Ansprüche,
**dadurch gekennzeichnet, dass**
die Bewegung der Unwuchtmasse (3) in einer Ebene senkrecht zum zu reinigenden Filter (4) und/oder zumindest in einer Tangentialebene zum zu reinigenden Filter (4) stattfindet, sodass die von der Unwuchtmasse (3) verursachte Schwingung und/oder Vibration entlang einer Achse senkrecht zur Ebene des zu reinigenden Filters (4) stattfindet.

6. Reinigungsvorrichtung nach einem der vorhergehenden Ansprüche,
**dadurch gekennzeichnet, dass**
der Filter (4) ein Material geringer Haftung umfasst, das zumindest die Fläche bedeckt, gegen die sich absetzt der Staub gesaugt und gefiltert für eine Reduzierung der Staubverstopfung und ein erleichtertes Ablösen des Staubes zu ermöglichen, wenn der Filter schwingt und/oder vibriert.

7. Reinigungsvorrichtung nach Anspruch 6,
**dadurch gekennzeichnet, dass**
der Filter (4) zumindest eine stromabwärts angeordnete erste Schicht aus gefaltetem Papier und eine stromaufwärts bezüglich des bewegten Luftstroms angeordnete zweite Schicht aus einem Material mit geringer Haftung umfasst.

8. Reinigungsvorrichtung nach einem der vorhergehenden Ansprüche,
**dadurch gekennzeichnet, dass**
die Vorrichtung einen Behälter (5) zur Staubaufnahme, der von dem Filter losgelöst und/oder entfernt ist, umfasst.

9. Reinigungsvorrichtung nach einem der vorhergehenden Ansprüche,
**dadurch gekennzeichnet, dass**
das Flügelrad (2) stromabwärts des in Vibration versetzten Filters (4) bezüglich des Luftstroms in den Saugmotor (1) angeordnet ist.

10. System mit dem Saugmotor (1) und einer Reinigungsvorrichtung nach einem der Ansprüche 1 bis 9,
**dadurch gekennzeichnet, dass**
das System eine Eintrittsöffnung (6a) des angesaugten Luftstroms und eine Austrifftsöffnung (6b) des angesaugten Luftstroms, die jeweils stromaufwärts und stromabwärts des Saugmotors (1) angeordnet sind, umfasst; dass das mit der Unwuchtmasse (3) versehene Flügelrad (2) auf der Höhe des Saugeingangs des Saugmotors (1) angeordnet ist und dass der Filter (4) eine Tasche bildet, die die Austrittsöffnung (6b) des angesaugten Luftstroms und/oder den Saugmotor (1) so umschließt, dass zumindest ein Teil des Filters (4) in einer Ebene senkrecht zur Schwingungsebene der Unwuchtmasse (3) angeordnet ist.

11. System nach Anspruch 10,
**dadurch gekennzeichnet, dass**
das System einen Behälter (5) gemäß Anspruch 8 zur Aufnahme des angesaugten und gefilterten Staubes umfasst, in den die Eintrittsöffnung (6a) des angesaugten Luftstroms führt, wobei der Saugmotor (1) vor der Austrittsöffnung (6b) des Luftstroms des Systems angeordnet ist, wobei der das Flügelrad (2) und den Saugmotor (1) umschließende Filter (4) in einem oberen Bereich des Behälters (5) angeordnet sind, sodass der angesaugte, gefilterte und vom Filter (4) abgelöste Staub in den Behälter fällt.

12. System nach Anspruch 11,
**dadurch gekennzeichnet, dass**
die durch den Filter (4), den Saugmotor (1), das Flügelrad (2) und die schwingende Unwuchtmasse (3) gebildete Baugruppe über Dämpfmittel (7) vor der Austrittsöffnung (6a) des Luftstroms des Systems angebracht ist, um die Übertragung von Vibrationen auf das Gesamtsystem zu begrenzen.

13. System nach einem der Ansprüche 10 bis 12,
**dadurch gekennzeichnet, dass**
der Filter (4) mindestens einen für den Luftstrom undurchlässigen Bereich umfasst, um den Durchgang des Luftstrom durch zumindest einen Bereich des Filters (4) zu erzwingen, der in einer Ebene senkrecht zur Schwingungsebene der Unwuchtmasse (3) angeordnet und für eine optimale Staubentfernung durch Vibration ausgelegt ist.

## Claims

1. Device for cleaning by vibration of at least one filter (4) mounted on the line for the stream of air induced by a suction motor (1), **characterised in that** the device for cleaning comprises at least, downstream of the filter (4) in relation to the direction of flow of the stream of air displaced by the motor, a propeller (2) provided with at least one vane (2a) mounted on at least the line for the stream of air for suction of dust induced by the motor in such a way as to be set in rotation by the stream of air which passes through it, the propeller (2) being mounted locked in rotation with an unbalancing means (3) so that the rotation of the propeller (2) leads to the rotation of the unbalancing means (3) which generates an oscillation and/or a vibration which is transmitted to at least the filter (4) of the device to allow the detachment of the dust built up on the filter (4).

2. Device for cleaning according to claim 1, **characterised in that** said unbalancing means (3) is positioned offset in relation to the pivoting axis of the propeller (2) so that the rotation of the propeller (2) and the unbalancing means (3) generates an oscillating movement.

3. Device for cleaning according to claim 2, **characterised in that** the propeller (2) is fitted with a part which comprises at least two limbs enclosing an angle between them so as to obtain an "L" shape, one of the limbs being mounted on the pivoting axis of the propeller (2), locked in rotation with the propeller (2), and the other limb forming the unbalancing means (3) in motion.

4. Device for cleaning according to claim 1, **characterised in that** the unbalancing means (3) is formed by a weight which is mounted locked on one of the vanes (2a) of the propeller (2) so that the rotation of the propeller (2) causes the unbalancing means (3) to pivot and generates an oscillating movement.

5. Device for cleaning according to one of the preceding claims, **characterised in that** the displacement of the unbalancing means (3) is produced in a plane perpendicular to the filter (4) to be cleaned and/or in at least one plane tangential to the filter (4) to be cleaned, so that the oscillation and/or the vibration generated by the unbalancing means (3) is produced in an axis perpendicular to the plane of the filter (4) to be cleaned.

6. Device for cleaning according to one of the preceding claims, **characterised in that** the filter (4) comprises a low-adhesion material which covers at least the face against which the induced and filtered dust is deposited to allow a reduction in the clogging with the dust and facilitated detachment of the dust when the filter (4) oscillates and/or vibrates.

7. Device for cleaning according to claim 6, **characterised in that** the filter (4) comprises at least one first layer of folded paper positioned downstream and a second layer produced from a low-adhesion material positioned upstream in relation to the stream of air in motion.

8. Device for cleaning according to one of the preceding claims, **characterised in that** the device comprises a container for recovery (5) of the dust which is detached and/or removed from the filter (4).

9. Device for cleaning according to one of the preceding claims, **characterised in that** the propeller (2) is positioned downstream of the filter (4) made to vibrate in relation to the direction of flow of the stream of air in the suction motor (1).

10. System comprising the suction motor (1) and implementing the device for cleaning according to one of claims 1 to 9, **characterised in that**, the system comprising an inlet orifice (6a) for the stream of air induced and an outlet orifice (6b) for the stream of air induced disposed respectively upstream and downstream of the suction motor (1), the propeller (2), fitted with the unbalancing means (3), is positioned in the suction inlet in the suction motor (1) and the filter (4) produces a pocket which encloses at least the outlet orifice (6b) for the stream of air induced by the system and/or the suction motor (1) while positioning at least one portion of the filter (4) in a plane perpendicular to the plane of oscillation of the unbalancing means (3).

11. System according to claim 10, **characterised in that** the system comprises a container for recovery (5) of the dust that is induced and filtered, according to claim 8, in which the inlet orifice for the stream of air induced (6a) debouches, the suction motor (1) being positioned against the outlet orifice (6b) for the stream of air induced by the system, the filter (4) enclosing the propeller (2) and the suction motor (1) then being positioned in an upper portion of the container (5) so that the dust that is induced, filtered and detached from the filter (4) falls into the container for recovery.

12. System according to claim 11, **characterised in that** the complete assembly formed by the filter (4), the suction motor (1), the propeller (2) and the oscillating unbalancing means (3), is mounted against the outlet (6b) for the stream of air induced by the system through the intermediary of damping means (7) to limit the transmission of vibrations to the complete system.

13. System according to one of claims 10 to 12, **characterised in that** the filter (4) comprises at least one airtight portion for passage of the stream of air to impose the passage of the stream of air to at least one portion of the filter (4) positioned in a plane perpendicular to the plane of oscillation of the unbalancing means (3) and arranged to ensure optimum cleaning of the dust by vibration.
